# EUROPÄISCHE PATENTSCHRIFT

(11) **EP 1 269 704 B1**
(45) Veröffentlichungstag und Bekanntmachung des Hinweises auf die Patenterteilung: **29.10.2003**
(21) Anmeldenummer: 01915362.6
(22) Anmeldetag: 16.03.2001
(51) Int. Cl.: H04L 27/26

(54) **REGLUNG DER SPITZENLEISTUNG EINES MEHRTRÄGERSIGNALS**
Peak power control in multicarrier signals
Réglage de la puissance de crête dans signaux multiporteuse

(30) Priorität: 28.03.2000 DE 10015257
(43) Veröffentlichungstag der Anmeldung: 02.01.2003
(73) Patentinhaber: Rohde & Schwarz GmbH & Co. KG, D-81671 München (DE)
(72) Erfinder: BOTT, Rainer, 82346 Andechs (DE); PENSEL, Karlheinz, 85354 Freising (DE)
(74) Vertreter: Körfer, Thomas, Dipl.-Phys.
(86) Internationale Anmeldenummer: EP0103018
(87) Internationale Veröffentlichungsnummer: WO01074019

(56) Entgegenhaltungen:
- EP-A- 0 932 285
- EP-A- 1 041 763
- WO-A-99/53665
- US-A- 4 179 586
- US-A- 4 943 980
- UWANO ET AL.: "Linearized constant peak-power coded OFDM transmission for broadband wireless access systems" IEICE TRANSACTIONS ON COMMUNICATIONS, Bd. E82-B, Nr. 12, Dezember 1999 (1999-12), Seiten 1932-1999, XP000996963 Tokyo, JP
- PATENT ABSTRACTS OF JAPAN vol. 1999, no. 08, 30. Juni 1999 (1999-06-30) & JP 11 074862 A (NTT), 16. März 1999 (1999-03-16)
- PATENT ABSTRACTS OF JAPAN vol. 2000, no. 07, 29. September 2000 (2000-09-29) & JP 2000 115123 A (NTT), 21. April 2000 (2000-04-21)

## Beschreibung

Die Erfindung betrifft ein Verfahren zum Übertragen von OFDM-Signalen laut Oberbegriff des Hauptanspruchs.

Zur Datenübertragung finden in der modernen Digitaltechnik sogenannte OFDM-Systeme (Orthogonal Frequency Devision Multiplex) bzw. davon abgeleitete Systeme, z.B. sogenannte COFDM-Systeme (Coded OFDM) Anwendung. Bei diesem Prinzip wird der digitale Datenstrom vor der Aussendung durch sogenanntes Mapping in komplexwertige Symbole umgewandelt und in eine Vielzahl von Teilsignalen aufgespalten, von denen jedes auf einem gesonderten Träger getrennt übertragen wird. Die Gesamtheit aller Träger im Zeitbereich wird als Signalblock bezeichnet, dessen Dauer gegebenenfalls unter Berücksichtigung eines sogenannten Schutz-Intervalls durch den Abstand der Träger bestimmt ist. Beim sogenannten DVB-T-System werden beispielsweise 1705 bzw. 6817 solcher Einzelträger benutzt. Im Empfänger werden diese Teilinformationen wieder zu einer Gesamtinformation des senderseitigen digitalen Datenstromes zusammengefaßt. Dieses sogenannte OFDM-System ist bekannt und wird beispielsweise näher beschrieben in Hermann Rohling, Thomas May, Karsten Brüninghaus und Rainer Grünheid, Broad-Band OFDM Radio Transmission for Multimedia Applications, Proceedings of the IEEE, Vol. 87, No. 10, October 1999, Seite 1778 ff.

Die Signalblöcke solcher OFDM-Signale besitzen keine konstante Einhüllende, da durch die Addition der Einzelträger, deren Phasenlage vom modulierenden Signal abhängt, die Amplitude starken Schwankungen auch während einer Blockdauer unterliegt. Bei einer großen Anzahl solcher Einzelträger kann der sogenannte PAPR-Wert (Peak-to-Average Power Ratio) bzw. der sogenannte CREST-Faktor erheblich über der mittleren Signalleistung liegen und damit erheblich größer als eins. Dies stellt erhebliche Dynamikanforderungen an die signalverarbeitenden Komponenten im Empfänger, da sie bei hoher Linearität eine entsprechende Dynamikreserve bereitstellen müssen. Bei geringer Aussteuerung mit der mittleren Signalleistung ist der Betrieb der Komponenten daher sehr uneffektiv. Dieser PAPR-Faktor eines OFDM-Signals ist im allgemeinen für jeden übertragenen Signalblock unterschiedlich, während die mittlere Leistung gleich bleibt. Eine Übersteuerung der Empfänger-Komponenten führt zu erheblichen Signalverzerrungen, was eine erhöhte Symbol- bzw. Bitfehlerrate bedeutet.

Es ist daher Aufgabe der Erfindung, ein Verfahren zur Aufbereitung solcher OFDM-Signale aufzuzeigen, bei dem solche Über- oder Untersteuerungen vermieden werden.

Diese Aufgabe wird ausgehend von einem Verfahren laut Oberbegriff des Hauptanspruches durch dessen kennzeichnende Merkmale gelöst. Vorteilhafte Weiterbildungen ergeben sich aus den Unteransprüchen.

Das Verschieben des Amplitudenmaximums der Signalblöcke eines OFDM-Signals ist an sich bekannt (US-Patent 4,943,980) um einen nahtlosen Übergang zwischen zwei aufeinanderfolgenden OFDM-Blöcken zu erreichen. Die Bedingung des nahtlosen Übergangs legt die zeitliche Lage des Maximums fest. Außerdem ist für OFDM-Systeme ein automatisches Verstärkungsregelungsverfahren bekannt, das mit Hilfe von Referenzsymbolen die mittlere Leistung des OFDM-Signals ermittelt und in Abhängigkeit davon die Verstärkung entsprechend einstellt (WO 99/53665 A). Dieses bekannte Verfahren setzen erhebliche Aussteuerreserven des Empfängers voraus.

Mit dem erfindungsgemäßen Verfahren, die Maximalamplitude je Signalblock zu ermitteln und diese dann an den Blockanfang zu verschieben, sind keine Aussteuerreserven im Empfänger notwendig und die im Empfänger vorgesehene automatische Verstärkungsregelung kann unmittelbar zu Beginn eines Signalblockes sofort einsetzen und den Verstärker auf diesen maximalen Amplitudenwert des Blockes regeln. Dadurch werden Übersteuerungen der Empfänger-Komponenten und somit Signalverzerrungen vermieden.

Die Erfindung wird im Folgenden anhand einer schematischen Zeichnung an einem Ausführungsbeispiel näher erläutert.

Der zu übertragende Datenstrom 11 wird im Sender 10 in bekannter Weise durch digitale Signalverarbeitung in einem OFDM-Modulator 1 im Basisband aufbereitet. Für jedes der einzelnen OFDM-Signale wird in einem digitalen Signalprozessor 2 der maximale Amplitudenwert je Block ermittelt.

Die Bestimmung der maximalen Amplitude je Block könnte auch im Analogteil des Senders vor der Verstärkung erfolgen. Die Bestimmung im noch digitalen Teil der Signalaufbereitung ist jedoch vorteilhafter

Im Empfänger 5 wird das empfangene OFDM-Signal 12 in einem Verstärker 6 mit automatischer Verstärkungsregelung (AGC, automatic gain control) verstärkt, in einem Analog/Digital-Wandler 7 digitalisiert und dann im OFDM-Demodulator 8 durch digitale Signalaufbereitung demoduliert. Gemäß der Erfindung wird senderseitig nicht nur die maximale Amplitude der OFDM-Signale je Block ermittelt, sondern auch noch deren zeitliche Lage und die OFDM-Signale werden dann jeweils so verschoben, daß die maximale Amplitude je Block jeweils am Beginn eines Blocks auftritt.

Die automatische Empfängerregelung 6 ist als Spitzenwertregler ausgebildet. Damit wird erreicht, daß unmittelbar bei Beginn eines Blocks sofort die automatische Verstärkungsregelung einsetzt und der Verstärker auf diesen maximalen Amplitudenwert des Signalblockes geregelt wird. Außerdem ist die Verstärkungsregelung so ausgebildet, daß sie zumindest während des gesamten Blocks auf einen durch den Empfänger gegebenen empfängerspezifischen Maximalwert konstant gehalten wird. Dazu erhält der Spitzenwertregler des Verstärkers 6 über die Wirkverbindung 9 aus dem Demodulator 8 eine entsprechende Information, wann auf den jeweiligen Spitzenwert geregelt werden soll und und wann die Verstärkung konstant gehalten werden soll.

Zur Kompensation der in einem Übertragungskanal auftretenden Signalverzerrungen wird bei solchen OFDM-Systemen oftmals noch ein sogenanntes Schutz-Intervall zu Beginn eines Blocks eingeführt, das zeitlich mindestens so groß ist wie die Dauer der Kanalimpulsantwort. In diesen Fällen ist es vorteilhaft, die Verschiebung des maximalen Amplitudenwertes im Block so vorzunehmen, daß die maximale Amplitude ebenfalls in diesem Schutzintervall liegt, so daß die automatische Regelung im Empfänger den Spitzenwert des Signals eines Blocks bereits im Schutzintervall messen kann.

Anstelle der automatischen Verstärkungsregelung im Analogteil des Empfängers könnte diese auch im Digitalteil nach dem Analog/Digital-Wandler 7 durchgeführt werden. Auch eine teilweise analoge und digitale Verstärkungsregelung ist denkbar. Da das Maximum der Amplitude eines Blocks jeweils am Beginn des Blocks liegt, kann auch die Taktrückgewinnung entsprechend verbessert werden, indem der Einrichtung zur Taktrückgewinnung die zeitliche Lage des Maximums als zusätzliche Information zugeführt wird.

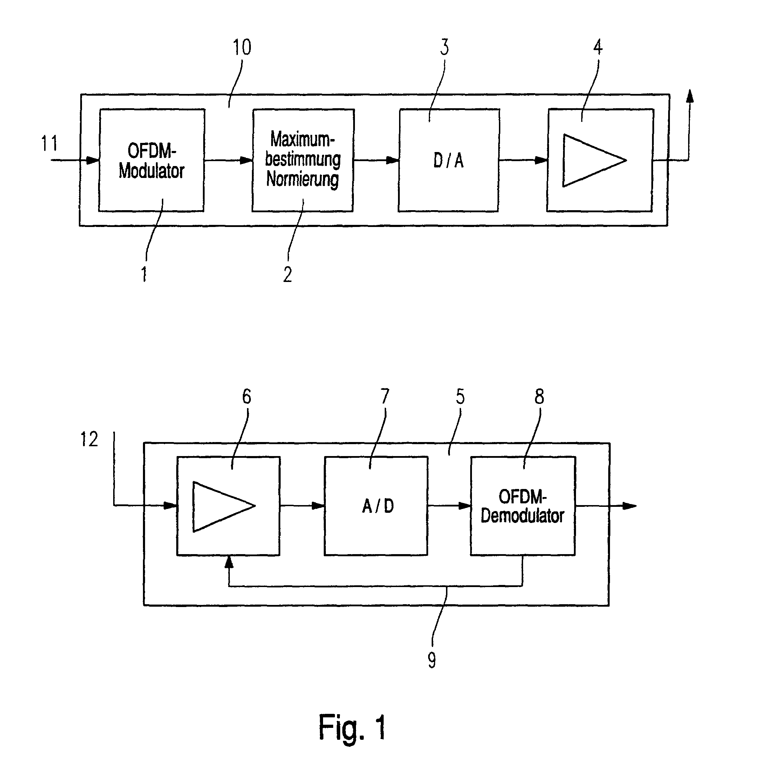

Vorzugsweise wird im Sender in den Signalprozessor 2 noch der durch die Komponenten wie Digital/Analog-Wandler, Verstärker u.dgl. systembedingte senderspezifische Maximalwert M eingegeben, mit welchem der Digital/Analog-Wandler noch maximal aussteuerbar ist, ohne dabei übersteuert zu werden. Der gemessene maximale Amplitudenwert je Block wird dann auf dieser senderspezifischen Maximalwert M normiert, d.h. die jeweils momentane Signalamplitude innerhalb des Blocks wird so erhöht bzw. herabgesetzt, daß ihr Maximalwert diesem senderspezifischen Maximalwert M entspricht. Auf diese Weise wird erreicht, daß die maximale Amplitude je Block jeweils diesem senderspezifischen Maximalwert M entspricht. Damit wird eine Übersteuerung oder Untersteuerung des darauffolgenden Digital/Analog-Wandlers 3 bzw. des darauffolgenden analogen Verstärkers 4 vermieden und diese Senderkomponenten arbeiten mit bestem Wirkungsgrad und stets im linearen Bereich. Diese Normierung der maximalen Amplitude eines Signalblockes auf einen vorgegebenen Maximalwert ist an sich bekannt (UWANO et al: "Linearized constant peak-power coded OFDM transmission for broadband wireless access Systems", IEICE TRANSACTIONS ON COMMUNICATIONS, Bd. E82-B, Nr. 12, Dezember 1999 (1999-12), Seiten 1932-1999, XP000996963, Tokyo, JP, Absatz '02.2!; Abbildung 2.

## Patentansprüche

1. Verfahren zum Übertragen von OFDM-Signalen, bei dem senderseitig in einem OFDM-Modulator (1) aus dem zu übertragenden Datenstrom (11) Signalblöcke aufbereitet, die eventuell Schutzintervalle enthalten, und als Multiträgersignal ausgesendet werden und bei dem empfangsseitig die übertragenen OFDM-Signale in einem Verstärker (6) mit automatischer Verstärkungsregelung verstärkt und dann in einem OFDM-Demodulator (8) demoduliert werden,
**dadurch gekennzeichnet,**
**daß** im Sender (10) für mindestens einen Signalblock dessen maximale Amplitude ermittelt wird und diese maximale Amplitude so verschoben wird, daß sie jeweils am Signalblockanfang auftritt.

2. Verfahren nach Anspruch 1,
**dadurch gekennzeichnet,**
**daß** die automatische Verstärkungsregelung im Empfänger (5) als Spitzenwertregler ausgebildet ist.

3. Verfahren nach Anspruch 1 oder 2,
**dadurch gekennzeichnet,**
**daß** die automatische Regelung im Empfänger (5) so ausgebildet ist, daß die Verstärkung für zumindest eine Blockdauer auf einem empfängerspezifischen Maximalwert konstant gehalten wird.

4. Verfahren nach einem der Ansprüche 1 bis 3,
**dadurch gekennzeichnet,**
**daß** die automatische Verstärkungsregelung in Abhängigkeit vom OFDM-Demodulator (8) so gesteuert ist, daß sie bei Überschreiten eines empfängerspezifischen Maximalwertes als Spitzenwertregler und unterhalb dieses empfängerspezifischen Maximalwertes als Konstantamplitudenregler arbeitet.

5. Verfahren nach einem der vorhergehenden Ansprüche für OFDM-Signale mit zusätzlichem zu Beginn eines Signalblocks vorgesehenem Schutzintervall,
**dadurch gekennzeichnet,**
**daß** die senderseitige Verschiebung des maximalen Amplitudenwertes so erfolgt, daß dieser im Schutzintervall des Blocks auftritt.

6. Verfahren nach einem der vorhergehenden Ansprüche,
**dadurch gekennzeichnet,**
**daß** im Sender (10) für mindestens einen Signalblock die ermittelte maximale Amplitude auf einen systembedingten senderspezifischen Maximalwert normiert wird.

## Claims

1. Method of transmitting OFDM signals, in which, at the transmitter end, signal blocks from the data stream (11) to be transmitted, which blocks may possibly contain buffer periods and which blocks are emitted as a multicarrier signal, are conditioned in an OFDM modulator (1) and in which, at the receiving end, the transmitted OFDM signals are amplified in an amplifier (6) having automatic gain control and then demodulated in an OFDM demodulator (8), **characterized in that**, in the transmitter (10), the maximum amplitude is determined for at least one signal block and said maximum amplitude is shifted in such a way that it always occurs at the beginning of the signal block.

2. Method according to Claim 1, **characterized in that** the automatic gain control in the receiver (5) is designed as peak-value controller.

3. Method according to Claim 1 or 2, **characterized in that** the automatic control in the receiver (5) is designed in such a way that the gain is kept constant at a receiver-specific maximum value for at least one block duration.

4. Method according to one of Claims 1 to 3, **characterized in that** the automatic gain control is controlled as a function of the OFDM demodulator (8) in such a way that it operates as a peak-value controller if the receiver-specific maximum value is exceeded, and below said receiver-specific maximum value, it operates as a constant amplitude controller.

5. Method according to any one of the preceding claims for OFDM signals, having an additional buffer period provided at the start of a signal block, **characterized in that** the transmitter-end shift of the maximum amplitude value takes place in such a way that it occurs in the buffer period of the block.

6. Method according to any one of the preceding claims, **characterized in that**, for at least one signal block, the maximum amplitude determined is normalized in the transmitter (10) to a transmitter-specific maximum value imposed by the system.

## Revendications

1. Procédé pour la transmission de signaux OFDM, dans lequel des blocs de signaux, qui contiennent éventuellement des intervalles de protection, sont préparés du côté émetteur dans un modulateur OFDM (1) à partir du flux de données (11) à transmettre et émis sous forme de signaux à porteuse multiple, et dans lequel les signaux OFDM transmis sont amplifiés côté réception dans un amplificateur (6) avec régulation d'amplification automatique et ensuite démodulés dans un démodulateur OFDM (8),
**caractérisé en ce que**, dans l'émetteur (10), pour au moins un bloc de signaux, son amplitude maximale est déterminée et cette amplitude maximale est décalée de manière à se produire respectivement au commencement du bloc de signaux.

2. Procédé selon la revendication 1, **caractérisé en ce que** la régulation d'amplification automatique dans le récepteur (5) est réalisée sous forme de régulateur de valeur de pointe.

3. Procédé selon l'une ou l'autre des revendications 1 et 2, **caractérisé en ce que** la régulation automatique dans le récepteur (5) est ainsi réalisée que l'amplification est maintenue constante pendant au moins une durée de bloc à une valeur maximale spécifique au récepteur.

4. Procédé selon l'une des revendications 1 à 3, **caractérisé en ce que** la régulation d'amplification automatique est commandée en fonction du démodulateur OFDM (8) de telle façon qu'elle fonctionne, lors du dépassement d'une valeur maximale spécifique au récepteur, comme régulateur de valeur de pointe, et au-dessous de cette valeur maximale spécifique au récepteur, comme régulateur à amplitude constante.

5. Procédé selon l'une des revendications précédentes, pour des signaux OFDM avec intervalle de protection prévu en supplément au commencement d'un bloc de signaux, **caractérisé en ce que** le décalage côté émetteur de la valeur d'amplitude maximum a lieu de telle façon que celle-ci se produit dans l'intervalle de protection du bloc.

6. Procédé selon l'une des revendications précédentes, **caractérisé en ce que** dans l'émetteur (10) et pour au moins un bloc de signaux, l'amplitude maximale déterminée est normalisée à une valeur maximale spécifique à l'émetteur, en fonction du système.
